# EUROPÄISCHE PATENTANMELDUNG

(11) **EP 0 568 857 A1**
(43) Veröffentlichungstag der Anmeldung: **10.11.1993**
(21) Anmeldenummer: 93106414.1
(22) Anmeldetag: 21.04.1993
(51) Int. Cl.: F16M 11/04, H04N 7/14

(54) **Elektronische Objektkamera**

(30) Priorität: 27.04.1992 DE 9205664 U
(71) Anmelder: Alcatel SEL Aktiengesellschaft, D-70435 Stuttgart (DE)
(72) Erfinder: Garcia-Victoria, Carlos, W-7146 Tamm (DE)
(74) Vertreter: Pohl, Herbert, Dipl.-Ing

(57) **Zusammenfassung**

Eine handelübliche Kamera (OK) mit zylindrischem Gehäuse (1) ist mittels zweier, in einem Kopfteil (18) angeordneten Gelenke (5, 7) an einem Ständer (ST) befestigt, der drei Holme (11, 12, 13) aufweist. Das eine Gelenk (7) hat eine waagerechte Achse, die des anderen Gelenkes (5) verläuft senkrecht dazu. Die Gelenke (5, 7) sind durch einen Arm (6) verbunden, an dem die Holme (11, 12, 13) enden. Zwei der Holme (11, 12) sind übereinander angeordnet und bilden mit dem Arm (6) und dem Fuß (14) des Ständers (ST) ein Doppelkurbelgetriebe. Der dritte Holm (13) endet oben zusammen mit dem unteren (11) der beiden anderen Holme im gleichen Kurbelgelenk (9), wogegen er unten mit Abstand von diesem Holm (11) auf der anderen Seite des Fußes (14) im gleichen Kurbelgelenk (15) angelenkt ist. Das Gelenk (7) mit der waagerechten Achse im Kopfteil (18) fällt mit dem einen Kurbelgelenk zusammen und ist mit einer Klemmschraube (10) versehen.

## Beschreibung

Die Erfindung betrifft eine elektronische Objektkamera nach dem Oberbegriff des Anspruchs 1.

Derartige Objektkameras sind aus dem DE 90 13 986 U1 bekannt. Bei diesen Kameras ist das Gehäuse jeweils mittels eines um eine waagerechte Achse drehbaren Gelenkes an einem Ständer befestigt. Letzterer besteht aus Holmen, die unten an einem Fuß und oben an einem das Gelenk enthaltenden Kopfteil enden. Der Fuß kann als Standfuß ausgebildet oder mit einer Klemmvorrichtung zur Befestigung an einer Plattenkante ausgestattet sein. Bei einer Ausführung ist das Gehäuse der Kamera und das Gelenk durch einen Arm verbunden, der ein weiteres Gelenk enthält, dessen Achse senkrecht zu der des anderen verläuft. Eine andere Ausführung weist ein zylindrisches Kameragehäuse auf, dessen Achse senkrecht zu der des Objektivs steht. Die Gelenke können teilweise oder sämtlich mit Rastmitteln für Zwischenstellungen sowie mit Anschlägen für die Endstellungen ausgestattet sein.

Der Erfindung liegt die Aufgabe zugrunde, nachdem neue, kleine Kameras mit rohrförmigem Gehäuse im Handel sind, eine andere Halterung zu schaffen, die leicht und stabil und einfach zu bedienen ist. Gelöst wird diese Aufgabe durch die im Anspruch 1 angegebenen Merkmale. Vorteilhafte Weiterbildungen sind den Unteransprüchen zu entnehmen.

Die Erfindung wird an Ausführungsbeispielen beschrieben, die in den zugehörigen Zeichnungen dargestellt sind. Darin zeigen:
- Fig. 1 und 2: eine elektronische Objektkamera mit zylindrischem Gehäuse an einem Ständer, dessen Fuß mit einer Klemmvorrichtung zum Befestigen an einer Plattenkante versehen ist, in Seitenansicht und Draufsicht;
- Fig. 3 und 4: den Kopfteil des Ständers mit der Objektkamera nach Fig. 1, vergrößert, in Seitenansicht und Draufsicht;
- Fig. 5: den Kopfteil wie in Fig. 3, jedoch mit geänderter Kamerastellung;
- Fig. 6 und 7: den Fuß des Ständers wie in Fig. 1 und 2, jedoch ohne Klemmvorrichtung und mit Fußplatte, vergrößert, in Seiten- und Vorderansicht;
- Fig. 8: den Fuß des Ständers wie in Fig. 6 und 7, in Draufsicht, mit halbkreisförmiger Fußplatte, und
- Fig. 9: den Fuß wie in Fig. 8, jedoch mit dreieckiger Fußplatte.

Die elektronische Objektkamera OK dient als Zusatzgerät zu Bildfernsprechgeräten zur Aufnahme und Übermittlung von grafischen Vorlagen, Gegenständen und Personen. Sie ist an einem Ständer ST angebracht, der aus einem Fuß, Holmen und einem Kopfteil besteht. Der Fuß 14 dient der Aufstellung, die Länge der Holme 11, 12 und 13 bestimmt die maximale Höhe, in die sich die Kamera bringen läßt, die am Kopfteil 18 befestigt ist, das den oberen Abschluß des Ständers bildet und Gelenke zum Drehen der Kamera enthält.

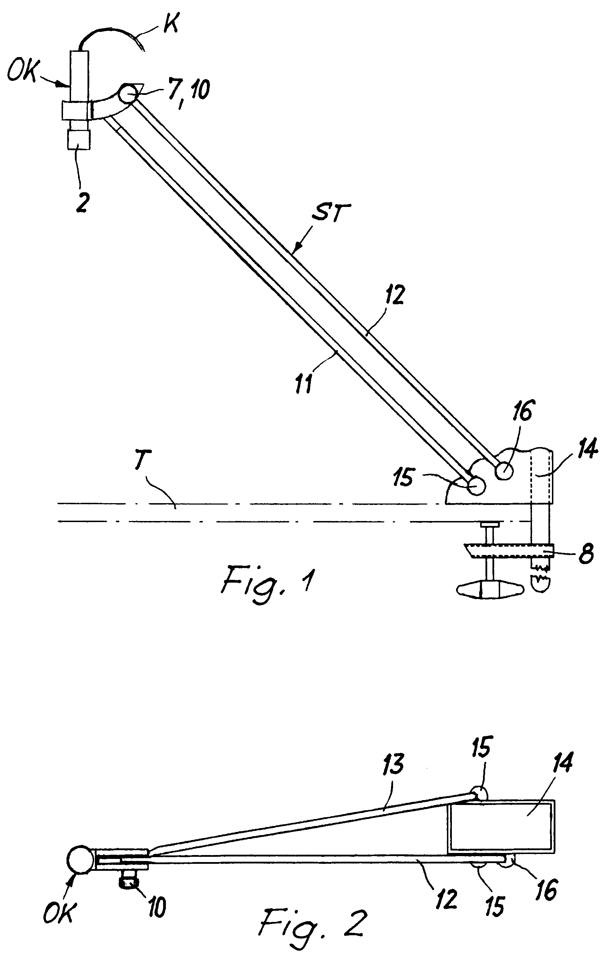

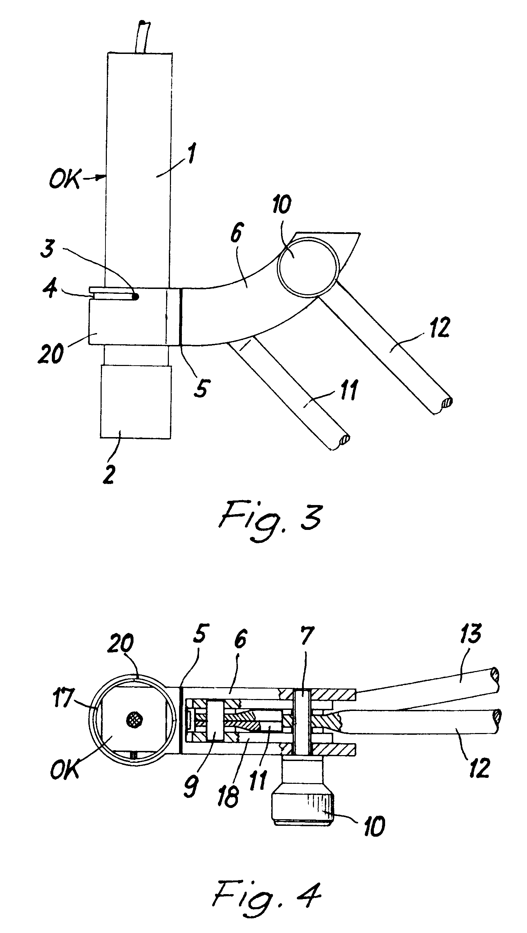

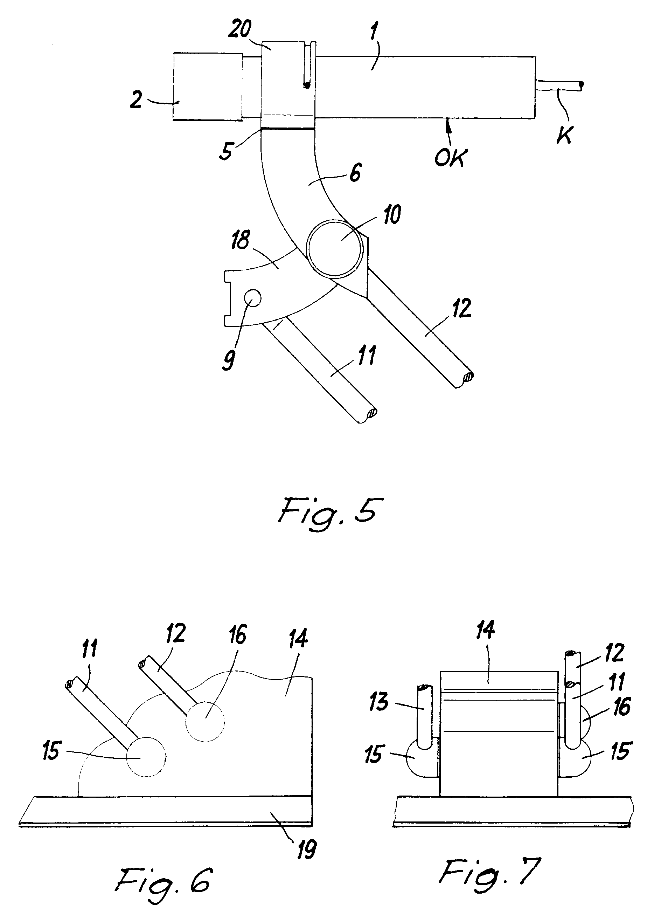

Aus den Fig. 1 bis 5 ist ersichtlich, daß die Objektkamera OK ein zylindrisches, rohrförmiges Gehäuse 1 hat, an dessen einem Ende das Objektiv 2 sitzt und an dessen anderem Ende das elektrische Kabel K austritt. Das Gehäuse 1 sitzt in einem Innenring 17, der drehbar in einem am Kopfteil 18 des Ständers ST angebrachten Außenring 20 gelagert ist, so daß es sich um seine Längsachse um wenigstens 90°, in der Regel um 180° drehen läßt. Die Endstellungen lassen sich durch einen Anschlagstift 3 des Innenrings 17 und die Länge eines Schlitzes 4 im Außenring 20, in dem der Anschlagstift gleitet, festlegen. Der Außenring 20 ist Endteil eines Armes 6, der ein Gelenk 5 enthält, dessen Achse senkrecht zu der der Objektkamera OK steht. Am anderen Ende ist der Arm 6 mit dem Kopfteil 18 durch ein Gelenk 7 verbunden (Fig. 4). Im Grundriß ist der Arm 6 U-förmig. Mit seinen freien Schenkeln ist der Arm 6 über zwei parallele Segmente geschoben, die das Kopfteil 18 bilden. Nahe der freien Enden sind Arm 6 und Kopfteil 18 durch einen Bolzen verbunden, der ein Gelenk 7 mit waagerechter Drehachse darstellt, die sowohl senkrecht zu der des Gelenkes 5 als auch senkrecht zu der der Kamera OK verläuft. Somit ist die Kamera in den drei Raumkoordinaten verstellbar. In Fig. 3 und 4 ist die Kamera vertikal nach unten gerichtet, in Fig. 5 um 90° in die Waagerechte geschwenkt dargestellt.

Der Bolzen des Gelenkes 7 ist beispielsweise ein Gewindebolzen mit Rändelmutter 10 oder eine Rändelschraube zum Festklemmen und Lösen des Gelenkes. Zwischen den beiden Segmenten des Kopfteils 18 enden die Holme 11, 12 und 13 des Ständers ST. Mit ihren anderen Enden sind die genannten Holme am Fuß 14 drehbeweglich angebracht. Aus Fig. 1 geht hervor, daß die Holme 11 und 12 parallel verlaufen und übereinander angeordnet sind. Sie bilden mit dem Fuß 14 und dem Kopfteil 18 ein Doppelkurbelgetriebe, wobei die Holme die Kurbeln, der Fuß das Gestell und das Kopfteil die Koppel darstellen. Der Holm 11 ist mit dem Kopfteil 18 durch das von einem Bolzen (Fig. 4 und 5) gebildete Gelenk 9, mit dem Fuß 14 durch das Gelenk 15 verbunden. Der Holm 12 ist im Kopfteil 18 durch das Gelenk 7, im Fuß 14 durch das Gelenk 16 angelenkt.

Aus Fig. 2 und 6 bis 9 ist ersichtlich, daß vom Kopfteil 18 ein dritter Holm 13 zum Fuß 14 führt, der im Kopfteil zusammen mit dem Holm 11 an das Gelenk 9, am Fuß zwar auch auf das gleiche Gelenk 15, jedoch auf der anderen Seite des Fußes geführt ist. Durch diese im Grundriß dreieckige Form des Ständers ST erhält er Stabilität in seitlicher Richtung. Federscheiben oder dergleichen Mittel an den Gelenken sorgen dafür, daß die Holme einerseits in jeder Stellung stehen bleiben, andererseits eine kontinuierliche Einstellung ermöglichen.

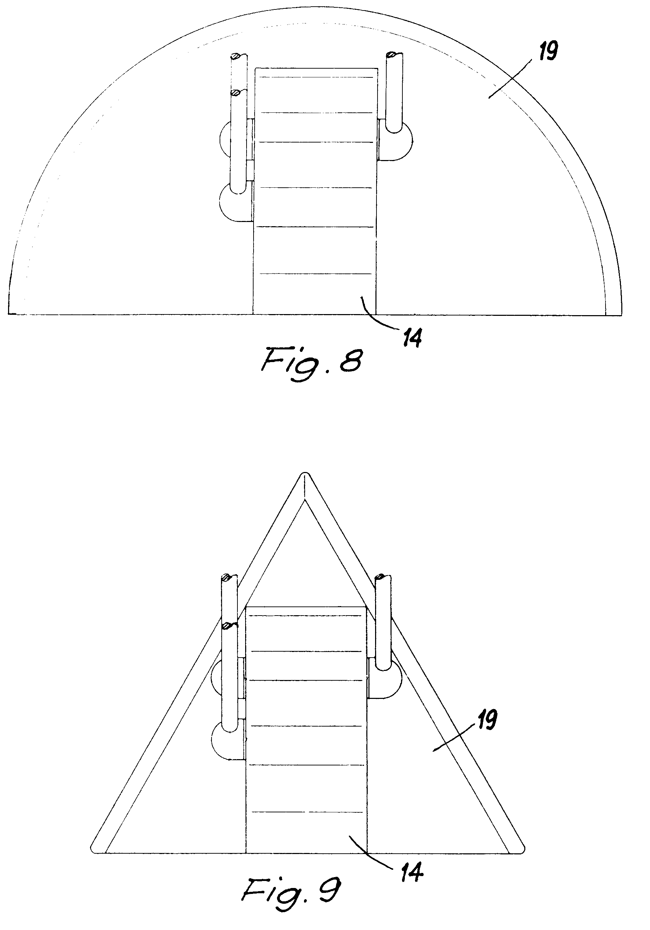

In Fig. 1 ist strichpunktiert eine Tischplatte T angedeutet, an der der Fuß 14 mit Hilfe der Klemmvorrichtung 8 befestigt ist. Bei dieser Ausführung ist der Fuß mit einer der üblichen schraubzwingenartigen Klemmvorrichtungen ausgerüstet. Bei den Ausführungen nach den Fig. 6 bis 9 ist der Fuß 14 jeweils mit einer schweren Fußplatte 19 versehen, die der Anordnung genügend Standfestigkeit verleiht. Die Fußplatte 19 kann beliebige geometrische Formen haben, in Fig. 8 ist eine halbkreisförmige, in Fig. 9 eine dreieckige Fußplatte gezeigt.

## Patentansprüche

1. Elektronische Objektkamera mit zylindrischem Gehäuse, das mittels eines Armes mit einem, um eine waagerechte Achse drehbaren Gelenk verbunden ist, das am oberen Ende eines von Holmen und einem Fuß gebildeten Ständers befestigt ist, wobei zwischen Gehäuse und Arm ein weiteres Gelenk eingefügt ist, dessen Achse senkrecht zu der des anderen Gelenkes verläuft, dadurch gekennzeichnet, daß der Ständer (ST) zwei parallele, übereinander angeordnete Holme (11, 12), die mit einem Arm (6) des Kopfteils (18) und dem Fuß (14) ein Doppelkurbelgetriebe bilden, sowie einen dritten Holm (13) aufweist, der im Kopfteil (18) zusammen mit dem unteren (11) der beiden anderen Holme im gleichen Kurbelgelenk (9) und am Fuß (14) mit Abstand von diesem Holm (11) im gleichen Kurbelgelenk (15) angelenkt ist.

2. Objektkamera nach Anspruch 1, dadurch gekennzeichnet, daß das Gelenk (7) mit der waagerechten Achse zum Verschwenken der Kamera (OK) mit dem einen Kurbelgelenk im Kopfteil (18) zusammenfällt und mit einer Klemmschraube (10) versehen ist.

3. Objektkamera nach Anspruch 1, dadurch gekennzeichnet, daß das Gelenk (5) zwischen Gehäuse (1) und Arm (6) um etwa 360° drehbar ist.

4. Objektkamera nach Anspruch 3, dadurch gekennzeichnet, daß das Gehäuse (1) der Kamera (OK) so mit einem Innenring (17) drehbar in einem Außenring (20) am Arm (6) des Ständers (ST) gehaltert ist, daß diese um wenigstens 90° um ihre Achse drehbar ist.

5. Objektkamera nach Anspruch 1, dadurch gekennzeichnet, daß die parallelen Holme (11, 12) an einer Seite, der dritte Holm (13) an der anderen Seite des Fußes (14) angeordnet sind.

6. Objektkamera nach Anspruch 5, dadurch gekennzeichnet, daß der Fuß (14) mit einer Fußplatte (19) versehen ist, in der er drehbar gelagert ist.

7. Objektkamera nach Anspruch 5 oder 6, dadurch gekennzeichnet, daß der Fuß (14) mit einer Klemmvorrichtung (8) zur Tischbefestigung ausgerüstet ist.
